# EUROPEAN PATENT SPECIFICATION

(11) **EP 0 430 600 B1**
(45) Date of publication and mention of the grant of the patent: **22.06.1994**
(21) Application number: 90312772.8
(22) Date of filing: 23.11.1990
(51) Int. Cl.: G05G 1/14

(54) **Motor vehicle control pedals and their mountings**
Kraftfahrzeugspedale und ihre Befestigungseinheit
Pédales de commande de véhicules automobiles et leurs supports

(30) Priority: 25.11.1989 GB 8926700
(43) Date of publication of application: 05.06.1991
(73) Proprietor: STERLING ENGINEERED PRODUCTS LIMITED, Brierley Hill, West Midlands DY5 2LB (GB)
(72) Inventor: Gandy, David, Stourbridge, West Midlands, DY8 4XW (GB)
(74) Representative: Stonehouse, Sidney William

(56) References cited:
- DE-A- 2 237 623
- DE-A- 3 001 274
- DE-A- 3 427 097
- DE-U- 8 614 205

## Description

This invention relates to motor vehicle control pedals and their mountings.

Conventionally motor vehicle control pedals such as accelerator, brake and clutch pedals have been made of metal and have been individually mounted in position in the vehicle by means of metal mounting brackets secured to the vehicle body, usually at the bulkhead. In general the metal used is steel and the mounting brackets have involved presswork, drilling and welding. The use of the metal pedals and mounting brackets has added to the weight of the vehicle, and the methods of manufacturing them and their assembly in the vehicle tend to be time consuming and relatively costly.

It is also known from DE-A-2237623 to provide a pedal unit which comprises motor vehicle control pedal and a mounting both of which are mouldings of plastics material and are assembled together, the pedal being pivoted to the mounting, ready for fitting of the unit to a motor vehicle. The mounting comprises an L-shaped plate with fixing holes in the base limb of the plate and upstanding flanges between which the pedal is pivotally supported. In this arrangement the fixing and sole support for the mounting when the unit is fitted to a vehicle for use is at the base limb of the plate. This support has the risk that fracture of the plastics mounting might occur at other parts under operating loads on the pedal.

The present invention aims to avoid at least some of the disadvantages set forth.

The present invention consists in a pedal unit comprising a mounting adapted to be secured to a structural part of a vehicle to fit the unit for use and at least one motor vehicle control pedal pivotally mounted on the mounting, the pedal and mounting being mouldings of plastics material, characterised in that the mounting has a back wall provided with fixing means whereby the mounting is able to be secured at the back wall to the vehicle structural part, a peripheral wall projecting forwards from and integral with the back wall and a pedal location comprising a pair of spaced gussets projecting forwards from and integral with the back and peripheral walls, the pedal being pivoted to and supported between the gussets and the gussets having associated therewith further fixing means spaced from the back wall for securing the mounting to the vehicle structural part.

The assembled pedal unit simplifies application of the control pedal to a vehicle. The fixing means at the back wall of the mounting and associated with the gussets of the pedal location may be apertures, which may be holes and/or slots, by which the mounting can be bolted in position on the structural part of the vehicle. Bolts or holes for bolts may be provided at fixed positions on the structural part by the vehicle manufacturer, and the mounting may have the apertures formed in it positioned ready to register with the bolts or holes at the structural part.

The peripheral wall and gussets strengthen the mounting and help to give it inherent rigidity. Additionally the provision of the further fixing means in association with the gussets and spaced from the back wall not only adds to the security of the unit when it is fitted to a vehicle for use, but it enables further support to be given to the mounting, particularly at the gussets where stresses from the operated pedal are concentrated. This further support spreads the forces to which the mounting is subjected in use, enhances the rigidity of the unit when it is in use and reduces the possibility of fracture of the mounting under applied loads.

The pedal and mounting may be made entirely of plastics material or either one or both of them may include some metal reinforcement, which may be moulded into the item or be applied to it after moulding.

Manufacture from plastics material enables the weights of the components to be reduced. By suitable designing of the shapes of the components the plastics material in each of the mouldings can be kept to a minimum to provide the necessary operating strength and rigidity.

Integral formations may be included in the mouldings whereby the pedal is pivoted to the mounting. Alternatively separate means may be applied to the components to provide the pivotal connection. For example a metal pivot may be applied which engages directly in holes or sockets in the plastics material in one or both of the components, or in one or more bushes or bearings of metal or other suitable bearing material such as, for example, nylon.

The pedal unit may include an accelerator pedal. The accelerator pedal may have an associated actuator also made as a moulding of a plastics material. The actuator may be fast with a pivot of the pedal. Preferably the pivot is metal. It may be of a tubular form. At least at those parts engaged with the pedal and the actuator the pivot is preferably of a non-circular section to resist, or assist in resisting, relative angular movement of the pedal and actuator about the pivot.

The pedal unit may have two or more control pedals assembled with the mounting. All the control pedals required for a motor vehicle may be assembled with the mounting. It will be appreciated that having two or more of the control pedals assembled with just the one mounting can considerably ease the fitting of the pedals to a vehicle.

Alternatively the control pedals for a vehicle may be divided between pedal units each in accordance with the invention. Such units may be arranged to be individually fitted and secured on a vehicle, or they may be adapted to be interconnected together and then applied as a composite fitting to a vehicle.

A suitable plastics material for the mouldings is a glass-filled nylon. Other plastics materials may possibly be used.

An embodiment of the invention will now be described by way of example only with reference to the accompanying drawings in which,
Figure 1 is a front view of a pedal unit in accordance with the first aspect of the invention, control pedals being shown in phantom;

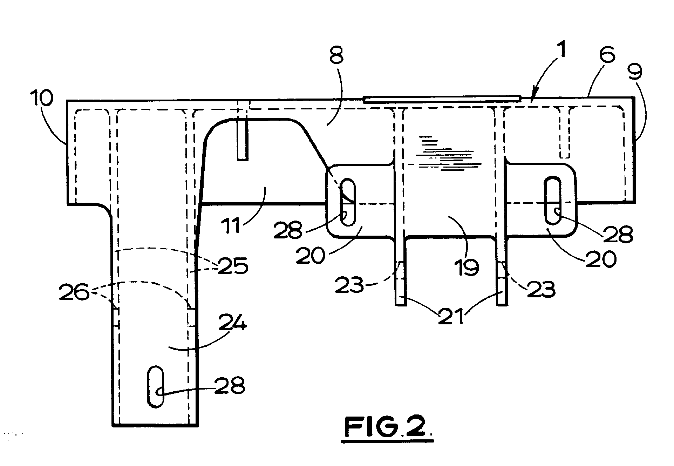

Figure 2 is a plan view of a mounting of the pedal unit;
Figure 3 is an enlarged front view, partly sectioned, of an accelerator pedal and actuator of the pedal unit;
Figure 4 is a side view of the actuator; and

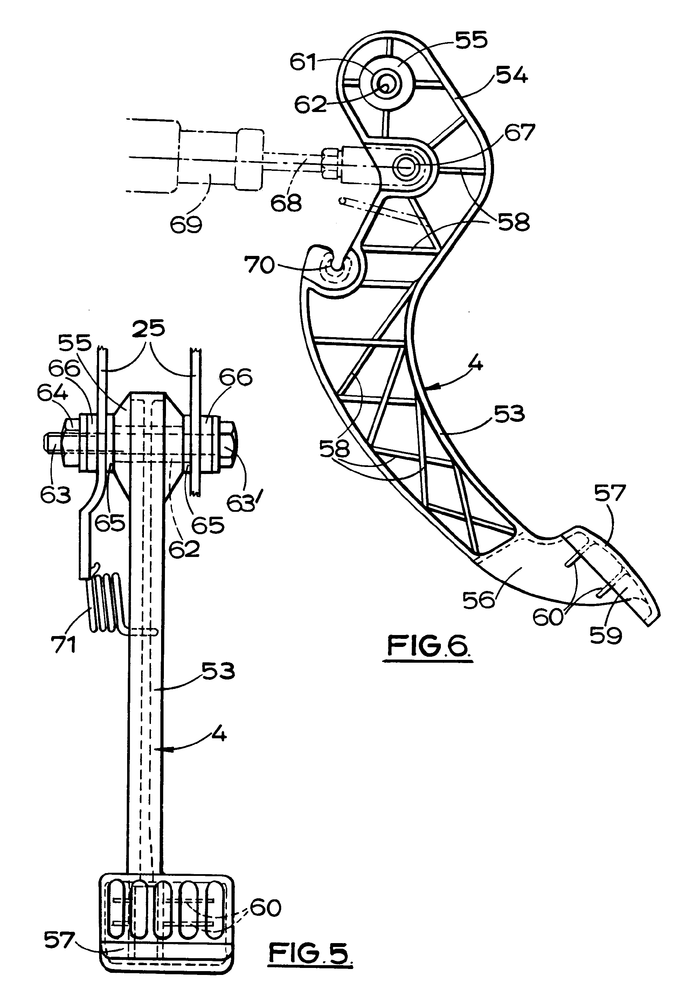

Figures 5 & 6 are front and side views respectively of a clutch pedal of the pedal unit.

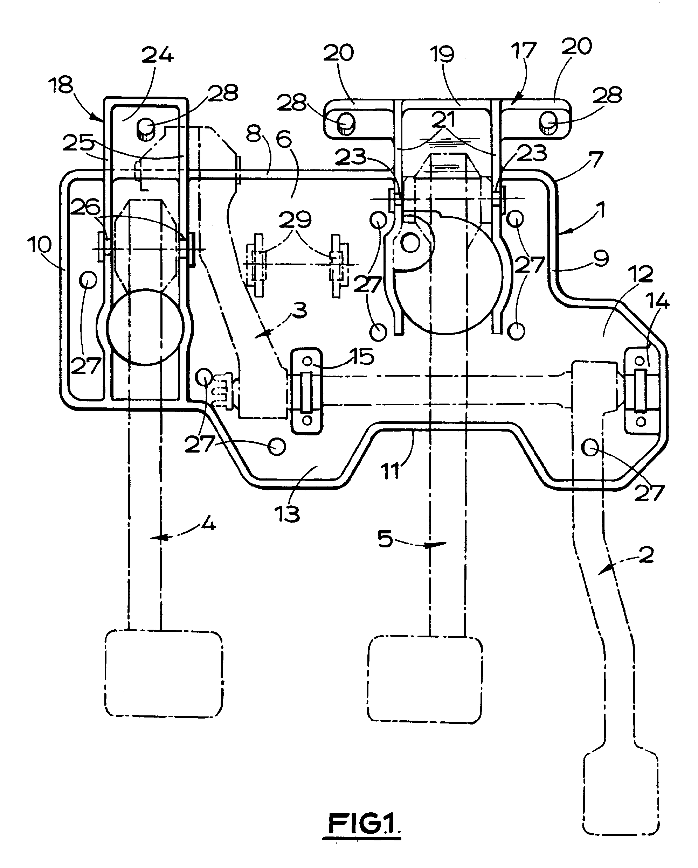

Referring to Figure 1 of the drawings, a pedal unit is shown which comprises a mounting 1, an accelerator pedal 2 and actuator 3, a clutch pedal 4 and a brake pedal 5. With the possible exception of the, brake pedal they are all made as plastics mouldings, preferably of a glass-filled nylon.

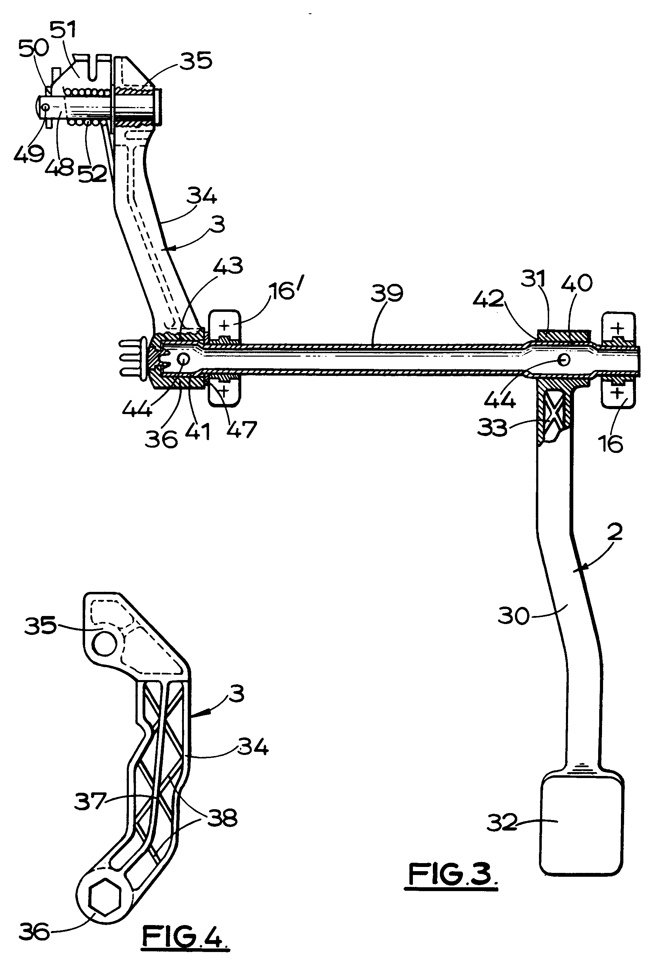

Mounting 1 is generally in the form of an open-fronted box having a flat back wall 6 and a continuous, forwardly-projecting, peripheral wall 7 forming a top wall 8, two side walls 9, 10 and a bottom wall 11. There is a first sideways and downward enlargement 12 at one side 9 of the mounting, and a second downward enlargement 13 at an intermediate part of the bottom. At the first enlargement 12 and also above the second enlargement 13 horizontally aligned anchorages 14 and 15 respectively are provided integrally with the back wall 6 for pivot bearings 16, 16′, Figure 3, for the accelerator pedal 2. Near to the opposite sides of the mounting there are respectively a brake pedal location 17 and a clutch pedal location 18. The brake pedal location 17, which is in the upper part of the mounting 1 at a position intermediate the enlargements 12 and 13, comprises a forwardly and upwardly inclined extension 19 of the top wall 8 which has lateral flanges 20 and parallel gussets 21 extending down from the extension 19 and joined to the top wall 8 and back wall 6. The gussets 21 extend more than half-way down the back wall. Towards the fronts of the gussets 21 in their upper parts are co-axial pivot holes 23 for the brake pedal 5. The clutch pedal location 18 extends through the depth of the mounting from the top wall 8 to the bottom wall 11. It also comprises a forwardly and upwardly inclined extension 24 of the top wall which extends appreciably further forwards then the extension 19 at the brake pedal location, and parallel gussets 25 joined to the top wall 8, back wall 6 and bottom wall 11. The front edges of the gussets 25 are stepped rearwards as they extend downwards. Co-axial pivot holes 26 for the clutch pedal 4 are formed in the larger upper portion of the gussets 25.

Fixing holes 27 are formed in the back wall 6, and there are fixing slots 28 in the flanges 20 of the brake pedal location 17 and in the extension 24 of the clutch pedal location 18, for securing the mounting 1 in position when the unit is installed in a vehicle for use.

As an optional extra, a pair of brackets 29, Figure 1, may be formed integrally on the back wall 6 for the pivoting of a cruise control, not shown, in the mounting between the brake pedal and clutch pedal locations.

The accelerator pedal 2 comprises, as shown in Figure 3, a main, slightly cranked, lever portion 30 having a boss portion 31 at its upper end and an enlarged foot pad portion 32 at its lower end. The lever 30 is of U-section, the base of the U being at the front of the lever, and has criss-crossed reinforcing webs 33 in its hollow extending between the side limbs of the U and also joined to the base of the U. The associated actuator 3 similarly has a cranked, but shorter, lever portion 34 with upper and lower boss portions 35, 36 at its upper and lower ends respectively. Between the bosses 35, 36 the lever 34 is arched, as can be seen from Figure 4. In this case the lever 34 is of I-section with an intermediate reinforcing longitudinal rib 37 and criss-crossed reinforcing ribs 38 at each side of the web of the I.

Both the accelerator pedal 2 and the actuator 3 are fixed on a tubular pivot pin 39 at enlarged hexagonal sections 40, 41 respectively so that they are restrained from rotation relative to the pivot pin. A first hexagonal section 40 is near to but spaced from one end of the pivot pin and is engaged as a tight push fit in a complementary hole 42 in the boss 31 of the accelerator pedal. A second hexagonal section 41 engages as a tight push fit in a complementary socket 43 in the boss 36 at the lower end of the actuator lever 34. Retaining pins 44 fix the respective bosses securely to the pivot pin 39 at the hexagonal sections.

The pivot bearings 16, 16′ for the accelerator pedal are attached to round section portions of the pivot pin 39 respectively outwardly of the first hexagonal section 40 and inwardly of the second hexagonal portion 41. The pivot pin 39 is rotatable in the bearings 16, 16′ which are fixed, as by rivets or bolts, to the anchorages 14, 15 on the mounting to locate the accelerator pedal and actuator pivotally in the mounting. A thrust washer 47 is fitted on the pivot pin 39 between the bearing 16′ and the adjacent lower boss 36 of the actuator.

At its upper boss 35 the actuator has a peg 48 fixed which carries, retained by a split pin 49 and washer 50, a pressed metal attachment 51 for the connection of a throttle cable to the actuator when the pedal unit is installed for use, and a helical return torsion spring 52 which acts on the lever 34 of the actuator and on the mounting 1 to urge the actuator and accelerator pedal 2 to a normal inoperative position.

Clutch pedal 4 comprises a lever portion 53 which, as shown in Figure 6, is cranked rearwardly from an upper end portion 54 formed with a boss 55 to its lower end portion 56 which is formed with an enlarged foot pad portion 57. For the most part the lever 53 is of I-section, which reduces in depth towards its lower end portion, with reinforcing ribs 58 at each side of the web of the I. The lower end portion 56 is of inverted U-section. The foot pad portion 53 is generally tabular with a rearward peripheral flange 59 and reinforcing tranverse ribs 60 at the back. A through hole 61 in the boss 55 is lined by a steel bush 62.

The clutch pedal 4 is pivoted in the clutch pedal location 18 of the mounting between the parallel gussets 25. A bolt 63 serving as a pivot pin engaged in the pivot holes 26 of the gussets 25 and passing through the bush 62 in the boss 55 of the clutch pedal provides the pivotal connection to the location, being secured by a lock nut 64. Thrust washers 65 are fitted on the bolt 64 between the boss 55 and the gussets, and bearing bushes 66 are fitted on the bolt outside the gussets adjacent the head 63′ of the bolt and the lock nut 64.

In the rear of the lever 53 of the clutch pedal, at the angle where the lever is cranked rearwards from the upper end portion 54, there is a further steel bush 67 which provides an attachment point for the piston 68 of a clutch operating cylinder 69 to be operated by the clutch pedal when the pedal unit is mounted for use in a vehicle. At the angle below that where the lever is angled forwardly again a nylon bearing 70 is located in the rear of the lever 53. A helical return torsion spring 71 engaged with that bearing 70 reacts on the mounting to cause the clutch pedal normally to be urged to an inoperative position.

The bush 62 at the boss 55, and the bush 67 and bearing 70 at the lever 53 may be incorporated into the clutch pedal as it is moulded.

The brake pedal 5 may be of similar form to the clutch pedal 4, and be similarly pivoted between the gussets 21 of the brake pedal location 17 and connected to a brake operating cylinder, and similarly spring urged to an inoperative position. Alternatively the brake pedal may be made of metal, or it may be made partially of metal and partially of plastics. For example in the latter form the brake pedal may comprise a metal pressing, which may be of relatively light gauge sheet, over-moulded with plastics material, preferably a glass-filled nylon, to the required finished form.

The pedals, their springs and the actuator 3 are all assembled in the mounting 1 so that the pedal unit is complete before it is fitted to a motor vehicle for use. It is then a relatively easy matter to apply the unit to a vehicle and fix it in position by bolting the mounting to its support at the fixing holes 27 and slots 28.

## Claims

1. A pedal unit comprising a mounting (1) adapted to be secured to a structural part of a vehicle to fit the unit in the vehicle for use and at least one motor vehicle control pedal (2;4;5) pivotally mounted on the mounting, the pedal and mounting being mouldings of plastics material, characterised in that the mounting (1) has a back wall (6) provided with fixing means (27) whereby the mounting is able to be secured at the back wall to the vehicle structural part, a peripheral wall (7) projecting forwards from and integral with the back wall and a pedal location (17;18) comprising a pair of spaced gussets (21;25) projecting forwards from and integral with the back and peripheral walls, the pedal (2;4;5) being pivoted to and supported between the gussets and the gussets having associated therewith further fixing means (28) spaced from the back wall (6) for securing the mounting to the vehicle structural part.

2. A pedal unit according to Claim 1 characterised in that the further fixing means (28) is at a part or parts (20;24) integrally formed with the gussets (21;25) and inclined relative to the back wall.

3. A pedal unit according to Claim 2 characterised in that the peripheral wall (7) has an extension (24) between the gussets (21;25) at which the further fixing means (28) is provided.

4. A pedal unit according to Claim 2 characterised in that the gussets (21;25) have integral flanges (20) at which the further fixing means is provided.

5. A pedal unit according to any preceding claim characterised in that there is a plurality of the control pedals (2;4;5) one of which is an accelerator pedal (2) having a pivot (39) which is retained to anchorages (14;15) formed integrally with the back wall (6).

6. A pedal unit according to Claim 5 characterised in that the accelerator pedal (2) has an associated actuator (3) also made as a moulding of plastics material and fast with the pivot (39) of that pedal.

7. A pedal unit according to any preceding claim characterised in that there is a second pedal location (17;18) for a second control pedal (2;4;5) and comprising a pair of spaced gussets (21;25) projecting forwards from and integral with the back and peripheral walls, the second pedal being pivoted to and supported between the gussets of the second pedal location (17;18) and those gussets having associated therewith fixing means (28) spaced from the back wall (6) for securing the mounting to the vehicle structural part.

## Patentansprüche

1. Pedaleinheit mit einem Trägerrahmen (1) zur Anbringung an einem Bauteil eines Fahrzeugs, um die Einheit in dem Fahrzeug für den Gebrauch anzuordnen, und mindestens einem Kraftfahrzeugsteuerpedal (2; 4; 5), welches drehbar an dem Trägerrahmen gelagert ist, wobei das Pedal und der Trägerrahmen Kunststofformteile sind, **dadurch** **gekennzeichnet,** daß der Trägerrahmen (1) eine mit einer Fixiereinrichtung (27) ausgestattete Rückwand (6) aufweist, wodurch der Trägerrahmen mit der Rückwand an dem Fahrzeug-Bauteil befestigt werden kann, eine Umfangswand (7), die einstückig mit der Rückwand ausgebildet ist und von dieser nach vorn wegsteht, und eine Pedalaufnahme (17; 18) mit einem Paar voneinander beabstandeter Anschlußplatten (21; 25), die einstückig mit der Rück- und Umfangswand ausgebildet sind und von diesen nach vorn wegstehen, wobei das Pedal (2; 4; 5) zwischen den Anschlußplatten drehbar gelagert ist und zu den Anschlußplatten eine weitere Fixiereinrichtung (28) gehört, die von der Rückwand (6) beabstandet ist, um den Trägerrahmen an dem Fahrzeugbauteil zu befestigen.

2. Pedaleinheit nach Anspruch 1, **dadurch gekennzeichnet,** daß die weitere Fixiereinrichtung (28) an einem Teil oder an Teilen (20; 24) ausgebildet ist, die einstückig mit den Anschlußstücken (21; 25) ausgebildet sind und bezüglich der Rückwand geneigt sind.

3. Pedaleinheit nach Anspruch 2, **dadurch gekennzeichnet,** daß die Umfangswand (7) zwischen den Anschlußplatten (21; 25) eine Verlängerung (24) aufweist, an der die weitere Fixiereinrichtung (28) vorgesehen ist.

4. Pedaleinheit nach Anspruch 2, **dadurch gekennzeichnet,** daß die Anschlußplatten (21; 25) einstückig angeformte Flansche (20) besitzen, an denen die weitere Fixiereinrichtung vorgesehen ist.

5. Pedaleinheit nach jedem vorhergehenden Anspruch, **dadurch** **gekennzeichnet,** daß mehrere Steuerpedale (2; 4; 5) vorgesehen sind, von denen eines ein Gaspedal (2) mit einem Drehzapfen (39) ist, der von Verankerungen (14; 15) gehalten wird, welche einstückig mit der Rückwand (6) ausgebildet sind.

6. Pedaleinheit nach Anspruch 5, **dadurch gekennzeichnet,** daß das Gaspedal (2) einen zugehörigen Aktuator (3) aufweist, der ebenfalls als Kunststofformteil ausgebildet und fest an dem Drehzapfen (39) des Pedals ausgebildet ist.

7. Pedaleinheit nach jedem vorhergehenden Anspruch, **dadurch** **gekennzeichnet,** daß es eine zweite Pedalaufnahme (17; 18) für ein zweites Steuerpedal (2; 4; 5) gibt, **gekennzeichnet durch** ein Paar voneinander beabstandeter Anschlußplatten (21; 25), die von der Rückwand und der Umfangswand, einstückig mit diesen ausgebildet, nach vorn wegstehen, wobei das zweite Pedal zwischen den Anschlußplatten der zweiten Pedalaufnahme (17; 18) drehbar gelagert ist und zu diesen Anschlußplatten eine Fixiereinrichtung (28) gehört, die von der Rückwand (6) beabstandet ist, um den Trägerrahmen an dem Fahrzeugbauteil zu befestigen.

## Revendications

1. Ensemble à pédales comprenant un support (1) apte à être fixé à une partie structurelle d'un véhicule pour fixer l'ensemble dans le véhicule en vue de son utilisation, au moins une pédale de commande (2;4;5) du véhicule automobile montée pivotante sur le support, la pédale et le support étant formés de pièces moulées en matière plastique, caractérisé en ce que le support (1) possède une paroi arrière (6) équipée de moyens de fixation (27), ce qui permet de fixer le support sur la paroi arrière de la partie structurelle du véhicule, une paroi périphérique (7) faisant saillie vers l'avant à partir de la paroi arrière et étant solidaire de cette dernière, et un élément (17;18) de montage de la pédale, comprenant un couple de goussets espacés (21;25) qui font saillie vers l'avant à partir de la paroi arrière et des parois périphériques et sont solidaires de ces parois, la pédale (2;4;5) étant montée pivotante sur et supportée entre les goussets, auxquels sont associés d'autres moyens de fixation (28) espacés de la paroi arrière (6) permettant la fixation du support à la partie structurelle du véhicule.

2. Ensemble à pédales selon la revendication 1, caractérisé en ce que les autres moyens de fixation (28) sont formés d'un seul tenant, au niveau d'une ou de plusieurs parties (20; 24), avec les goussets (21;25) et sont inclinés par rapport à la paroi arrière.

3. Ensemble à pédales selon la revendication 2, caractérisé en ce que la paroi périphérique (7) possède un prolongement (24) situé entre les goussets (21;25) et au niveau duquel sont prévus les autres moyens de fixation (28).

4. Ensemble à pédales selon la revendication 2, caractérisé en ce que les goussets (21;25) possèdent des brides (20) formées d'un seul tenant sur les goussets et au niveau desquelles sont prévus les autres moyens de fixation.

5. Ensemble à pédales selon l'une quelconque des revendications précédentes, caractérisé en ce qu'il est prévu une pluralité de pédales de commande (2;4;5), dont l'une est une pédale d'accélérateur (2) possédant un pivot (39) qui est retenu dans des dispositifs d'ancrage (14;15) formés d'un seul tenant avec la paroi arrière (6).

6. Ensemble à pédales selon la revendication 5, caractérisé en ce qu'à la pédale d'accélérateur (2) est associé un actionneur (3) également réalisé sous la forme d'une pièce moulée en matière plastique et fixée au pivot (39) de cette pédale.

7. Ensemble à pédales selon l'une quelconque des revendications précédentes, caractérisé en ce qu'il est prévu un second élément (17;18) de fixation pour une seconde pédale de commande (2;4;5), qui comporte un couple de goussets espacés (21;25) qui font saillie vers l'avant à partir de la paroi arrière et des parois périphériques et sont solidaires de ces parois, la seconde pédale pivotant sur et étant supportée entre les goussets de l'élément (17;18) de montage de la seconde pétale, tandis qu'à ces goussets sont associés les moyens de fixation (28) qui sont espacés de la paroi arrière (6) et permettent de fixer le support à la partie structurelle du véhicule.
